# EUROPÄISCHE PATENTANMELDUNG

(11) **EP 2 756 953 A1**
(43) Veröffentlichungstag der Anmeldung: **23.07.2014**
(21) Anmeldenummer: 13151865.6
(22) Anmeldetag: 18.01.2013
(51) Int. Cl.: B41F 33/00, G06F 3/01, G06F 3/03

(54) **Verfahren zur Bedienung eines Leitstandes für Druckmaschinen**

(71) Anmelder: ABB Schweiz AG, 5400 Baden (CH)
(72) Erfinder: Greiner, Markus, 5000 Aarau (CH)
(74) Vertreter: ABB Patent Attorneys

(57) **Zusammenfassung**

Die vorliegende Erfindung betrifft ein Verfahren zur Setzung von Maschineneinstellungen (1) einer Druckmaschine (2) mittels eines Leitstandes (3). Der Leitstand (3) weist eine Auflagefläche (4) zur Auflage eines Druckexemplars (5) auf und führt wenigstens folgende Verfahrensschritte aus: Erfassen mittels einer Bilderfassungseinheit (9) von Umgebungsbilddaten (6) von mindestens einer Geste (G) eines in einer Umgebung des Druckexemplars (5) gestikulierenden menschlichen Operators (8); Auswerten der Umgebungsbilddaten (6) mittels einer Prozessoreinheit (10) des Leitstandes (3), wobei die Prozessoreinheit (10) die mindestens eine Geste (G) des Operators (8) in den Umgebungsbilddaten (6) identifiziert; und Zuordnen der mindestens einen identifizierten Geste (Gᵢ) des Operators (8) einem vorbestimmten Befehl durch die Prozessoreinheit (10). Hierbei wird der zugeordnete Befehl zu einem ausgewählten Befehl (*B*ₐ), welcher bei Ausführung durch den Leitstand (3) zur Setzung von Maschineneinstellungen (1) dient. Zudem betrifft die Erfindung einen Leitstand (3), welcher eingerichtet ist, dieses Verfahren durchzuführen.

## Beschreibung

### TECHNISCHES GEBIET

Die vorliegende Erfindung betrifft ein Verfahren zur Steuerung von Maschineneinstellungen einer Druckmaschine über einen Leitstand, und einen solchen Leitstand.

### STAND DER TECHNIK

Druckmaschinen zur Herstellung auflagenstarker Druckerzeugnisse werden heute zunehmend automatisiert betrieben. Die Maschinenbelegung für einen anstehenden Druckauftrag wird von einem Produktionsmanagement an den Leitstand übergeben, worauf der Leitstand die Druckmaschine konfigurationsgemäss durch den Druckvorgang leitet. Moderne Druckmaschinen arbeiten zudem mit hoher Produktionsgeschwindigkeit und sind in der Lage, grosse Mengen von Rohmaterial in kurzer Zeit zu verarbeiten. Allgemein steigende Anforderungen an Druckqualität gehen mit zunehmendem Kostendruck einher, was Qualitätsmängel in der Druckware zu einem signifikanten Problem macht. Druckfehler sind daher vorteilhaft früh erkannt, um schnell behebbar zu sein und um den Makulaturanfall und/oder Leerlauf- oder Standperioden einer makulierenden Druckbahn gering zu halten.

Die Qualitätskontrolle wird auch heute noch, zumindest teilweise, dem Operator der Maschine überlassen. Typischerweise muss sich der Operator ein aktuelles Druck- oder Belegexemplar (etwa eine Zeitung) besorgen und auf einer Ablage des Bedienpults im Leitstand legen. Dieses Exemplar hat er dann, so denn mehrseitig, durchzublättern und insbesondere Parameter wie Farbdichte je Farbseparation, Schnittlage, Passer und/oder andere Qualitätsmerkmale zu überprüfen und die Parameter bei Bedarf über Bedienelemente anzupassen.

Als Passer wird ein Element zur Überprüfung des Übereinanderpassens einzelner Farben beim Mehrfarbendruck bezeichnet. Der Passer ist also relevant für das standgerechte Drucken bei mehreren aufeinanderfolgenden Druckgängen.

Konventionelle Leitstandkonzepte sehen vor, dass Druckmaschinen, bspw. im Bereich Bogen- oder Rollenoffsetdruck oder Tiefdruck über einen Bildschirm und Tastatur, Spezialtasten und Maus oder Roll-Track oder auch Touch-Screens bedient werden. Dazu sind dann die Bedienelemente um die Ablage angeordnet, was vom Operator eine Vielzahl von Handbewegungen zur Bedienung abverlangt, während er sich auf das Druckexemplar konzentriert. Der Operator arbeitet also stets in einer Abstraktion der Zeitung, welche durch die Bedienelemente gegeben ist, um Parameter anzupassen, was die Interaktion zwischen Operator und Maschine aufwändig, komplex und langsam macht. Gleichzeitig muss der Operator im Druckexemplar blättern und somit ständig zwischen Druckexemplar und Abstraktion durch Bedienelemente wechseln, was nachteilig ist und die insbesondere den Arbeitsablauf hemmt und fehleranfällig macht.

### DARSTELLUNG DER ERFINDUNG

Es ist somit eine Aufgabe der vorliegenden Erfindung, ein Verfahren zur Setzung von Maschineneinstellungen einer Druckmaschine mittels eines Leitstandes für Druckmaschinen bereitzustellen, gemäss welchem die Interaktion eines Operators der Druckmaschine mit dem Leitstand verbessert, insbesondere effizienter und intuitiver für den Operator gemacht wird.

Diese und weitere Aufgaben werden durch ein Verfahren zur Setzung von Maschineneinstellungen einer Druckmaschine mittels eines Leitstandes gelöst, wobei der Leitstand eine Auflagefläche zur Auflage eines Druckexemplars aufweist, und wobei der Leitstand wenigstens folgende Verfahrensschritte ausführt:
(a) Erfassen mittels einer Bilderfassungseinheit von Umgebungsbilddaten von mindestens einer Geste eines in einer Umgebung des Druckexemplars bzw. der Auflagefläche für das Druckexemplar gestikulierenden menschlichen Operators; und
(b) Auswerten der Umgebungsbilddaten mittels einer Prozessoreinheit des Leitstandes, wobei die Prozessoreinheit die mindestens eine Geste des Operators in den Umgebungsbilddaten identifiziert; und
(c) Zuordnen der mindestens einen identifizierten Geste des Operators einem vorbestimmten Befehl durch die Prozessoreinheit, wobei der zugeordnete Befehl zu einem ausgewählten Befehl wird, welcher bei Ausführung durch den Leitstand zur Setzung von Maschineneinstellungen dient.

Der Erfindung liegt unter anderem die Erkenntnis zu Grunde, dass der Operator durch Gestikulieren in einer Umgebung des Druckexemplars oder des Belegexemplars einfacher, intuitiver und effizienter die oben beschriebenen Parameter bzw. Maschineneinstellungen anpassen kann. Die Bedienung der Druckmaschine erfolgt also direkt im bzw. in mit Bezug auf das Druckexemplar und nicht in einer räumlich getrennten Abstraktion der Zeitung, welche gemäss dem Stand der Technik durch Tastaturen und dergleichen bereitgestellt wird.

Insbesondere Gestikulieren im oder auf dem Druckexemplar ist vorteilhaft, da der Operator die Abstraktion der herkömmlich um das Druckexemplar angeordneten Bedienelemente nicht durchführen muss und unnötige Handbewegungen zu den herkömmlichen Bedienelementen vermeidet. Es ist also keine Abstraktion des Druckexemplars durch Bedienelemente notwendig. Er kann direkt im oder über dem Druckexemplar und somit mit direktem intuitivem Bezug zu den Stellen, welche seiner Meinung nach der Änderung bedürfen, operieren. Der Leitstand kann somit von einem komplexen Maschinenbauteil zu einem einfachen Tisch zur Ablage eines Druckerzeugnisses reduziert werden.

Unter dem Begriff "Umgebung der Auflagefläche des Druckexemplars" ist insbesondere das Raumvolumen direkt oberhalb der Auflagefläche des Druckexemplars bzw. des aufliegenden Druckexemplars zu verstehen, das vorzugsweise bis in eine Höhe über dem Druckexemplar reicht, welche durch den Operator gestikulierend abdeckbar ist. Die Höhe, als Abragungshöhe des Volumens über die Ablage- bzw. Auflagefläche zu verstehen, kann also bspw. 10 bis 100 Zentimeter, insbesondere 20 bis 50 oder 80 Zentimeter betragen. Vorzugsweise umfasst dieses Volumen auch das Druckexemplar selbst, insbesondere dessen Oberfläche, sodass der Operator auch unter Berührung über das Druckexemplar wischen kann. Seitlich kann das Volumen kleiner sein als das Druckexemplar oder bis zur oder über das Druckexemplar hinausgehen.

Es ist auch denkbar, dass das Druckexemplar auf eine nicht horizontale Ablagefläche geklemmt wird und der Operator vor dem Druckexemplar gestikuliert. Grundsätzlich kann die Ablagefläche beliebig im Raum stehen, wobei sich das Volumen von dieser Fläche weg erstreckt. Das Volumen kann auch vom Druckexemplar räumlich separiert sein. Es können zudem mehrere nicht zusammenhängende Volumina bereitgestellt sein, in welchen der menschliche Operator gestikuliert. Bspw. kann ein Volumen für Handgesten und ein Volumen für Fussgesten eines sitzenden oder stehenden Operators vorgesehen sein.

In einer Weiterbildung ist ein Bildschirm oder ein Präsentationsmittel, eine Darstellungseinheit vorgesehen, welche ein Bild eines Druckexemplars anzeigt, worauf der Operator über und/oder auf dem Druckexemplar gestikulieren kann. Das physikalische Druckexemplar ist also durch eine virtuelle Repräsentation ersetzbar.

Der gestikulierende Operator kann hierbei berührungsfrei in der Luft gestikulieren und/oder unter Berührung des Druckexemplars auf diesem gestikulieren.

In einer Weiterbildung des Verfahrens wird der ausgewählte Befehl von der Prozessoreinheit des Leitstandes bearbeitet, indem die Prozessoreinheit den ausgewählten Befehl wahlweise zwecks Setzens der Maschineneinstellungen ausführt oder aufgrund von Maschineneinstellungen oder benutzer- oder werkseitigen Voreinstellungen verweigert. Eine Befehlsverweigerung beugt Fehlmanipulationen der Maschine vor und vermindert damit effizient das Risiko einer Beschädigung durch unsachgerechte Bedienung. Die Voreinstellung sind je nach Maschine durch einen Fachmann zu setzen.

In einer Weiterbildung des Verfahrens identifiziert die Prozessoreinheit mindestens folgende Arten von Gesten und ordnet jeder dieser identifizierten Gesten den zugehörigen Befehl zu:
i) Gesten betreffend eine vorbestimmte Maschineneinstellung;
ii) Gesten betreffend das gesamte Druckexemplar;
iii) Gesten betreffend die gesamte aufgeschlagene Seite;
iv) Gesten betreffend mindestens eine einzelne Zone einer oder mehrerer Farbseparationen der aufgeschlagenen Seite; und
v) Gesten betreffend mindestens eine gemeinsame Zone einer oder mehrerer Farbseparationen mehrerer oder aller Seiten des Druckexemplars.

Im Allgemeinen können solche Gesten bspw. mindestens eine Farbseparation bzw. einen Farbauszug betreffen. Jede Farbseparation kann aus mehreren Farbzonen bestehen. Hierbei können Gesten vorgesehen sein, welche eine bestimmte Farbseparation, eine bestimmte Kombination von Farbseparationen oder alle Farbseparationen gleichzeitig bzw. einzelne Zonen davon betreffen.

In einer Weiterbildung ist auch denkbar, dass über eine separate Geste die Farbseparation oder die Kombination von Farbseparationen durch den Operator bestimmt bzw. angedeutet werden, für welche eine vorgängige oder eine nachfolgende Geste im Sinne der obigen Aufzählung i) bis v) gilt. Somit kann bspw. eine Farbdichte einer einzelnen Zone oder einer ganzen Farbseparation bzw. aller Farbseparationen gleichzeitig pro Seite oder für alle Seiten eingestellt werden.

Allgemein gilt, dass wenn eine Geste ein Register (bspw. ein Farbregister oder eine Schnittlagenregister) betrifft, sich diese Geste vorzugsweise auf das ganze Druckprodukt und damit auf alle Zonen aller Seiten bezieht.

Die Gesten können dabei grundsätzlich jeweils einer der genannten Arten zugeordnet sein. Vordefinierte Gesten können bspw. die Art der nachfolgenden Geste festlegen oder der Operator bestimmt die Art der Geste über konventionelle Bedienelemente.

Es ist also denkbar, dass die erfindungsgemässe Bedienung mit konventionellen Bedienelementen kombiniert wird.

In einer Weiterbildung des Verfahrens werden die Umgebungsbilddaten durch die Bilderfassungseinheit optisch im dreidimensionalen Raum erfasst, wobei die Bilderfassungseinheit vorzugsweise aus mindestens einer Kamera besteht. Diese Kamera kann eine herkömmliche und für den Massenmarkt konzipierte und damit kostengünstige Videokamera oder bspw. auch eine Infrarotkamera oder ähnliche Kamera sein.

Die Bilderfassungseinheit ist so angeordnet, dass die Gesten mit Vorzug im dreidimensionalen Raum aufgenommen werden. Grundsätzlich kann auch ein Gestikulieren in einer Ebenen vorgesehen sein. Zusätzliche Dimensionen sind jedoch vorteilhaft, da sie zusätzliche Freiheitsgrade bilden, anhand welche sich Gesten unterscheiden, womit eine grössere Vielzahl an Bedienmöglichkeiten bereitgestellt ist.

In einer Weiterbildung des Verfahrens sind die Gesten des Operators Handgesten. Diese Gesten werden vorzugsweise berührungsfrei in einem Luftvolumen der besagten Umgebung ausgeführt. Es ist hierbei auch möglich, dass der Operator das Druckexemplar berührt, bspw. auf diesem gestikulierend wischt.

In einer abermaligen Weiterbildung des Verfahrens wird dem gestikulierenden Operator aufgrund mindestens einer von der Prozessoreinheit identifizierten Geste:
i) Information über die Druckmaschine mittels einer Darstellungseinheit im Leitstand angezeigt; und/oder
ii) Zugang zu weiteren durch die Prozessoreinheit einer identifizierten Geste zuordenbare Befehle von der Prozessoreinheit ermöglicht; und/oder
iii) mindestens ein zusätzliches durch den Operator aktivierbares Manipulationselement zum Setzen von Maschineneinstellungen von der Prozessoreinheit bereitgestellt.

In einer Weiterbildung des Verfahrens präsentiert die Prozessoreinheit dem Operator beim Ausführen eines ausgewählten Befehls eine erste Rückmeldung und/oder beim Verweigern eines ausgewählten Befehls eine zweite Rückmeldung. Diese Rückmeldung kann über die Darstellungseinheit oder andere Kanäle, bspw. in akustischer Weise geschehen. Vorteilhafterweise erfasst der Leitstand mittels der Bilderfassungseinheit Druckexemplar-Bilddaten des Druckexemplars, vorzugsweise vollflächig. Diese Bilddaten werden mittels der Prozessoreinheit ausgewertet. Die Druckexemplar-Bilddaten umfassen hierbei bevorzugt wenigstens Information über die aufgeschlagene Seite, bspw. deren Seitenzahl, des auf der Auflagefläche des Leitstandes aufliegenden Druckexemplars.

In einer Weiterbildung vergleicht die Prozessoreinheit die Druckexemplar-Bilddaten mit Druckexemplar-Solldaten und nimmt bei vordefinierter Abweichung der Druckexemplar-Bilddaten von den Druckexemplar-Solldaten automatisch eine vordefinierte Korrektur an den Maschineneinstellungen der Druckmaschine vor. Dies kann bspw. die Passer betreffen oder eine Schnittlage. Es ist auch denkbar, dass die Maschine eine Grobkorrektur automatisch vornimmt und der Operator dann die Feinjustierung nachträglich mittels Gesten durchführt. Diese Selbstkorrektur entlastet den Operator, indem gewisse Standardprobleme automatisch behoben werden.

Das oben genannte Verfahren kann insbesondere zur Steuerung einer Druckmaschine, insbesondere einer Rotations-Zeitungsdruckmaschine, einer Offsetdruck-Druckmaschine oder einer Tiefdruck-Druckmaschine verwendet werden.

Es ist eine weitere Aufgabe der Erfindung, einen Leitstand bereitzustellen, welcher eine derartige Bedienung des Leitstandes durch den Operator erlaubt, also das oben genannte Verfahren erlaubt, und damit die konventionelle Bedienung über um das Druckexamplar angeordnete Bedienelemente zumindest teilweise ersetzt.

Die Erfindung betrifft also auch einen Leitstand für die Steuerung von Maschineneinstellungen einer Druckmaschine, wobei der Leitstand eine Auflagefläche zur Auflage eines Druckexemplars aufweist, und löst diese Aufgabe dadurch, dass der Leitstand ferner eine Bilderfassungseinheit zum Erfassen von Umgebungsbilddaten von Gesten eines in einer Umgebung des Druckexemplars gestikulierenden menschlichen Operators aufweist, dass der Leitstand eine Prozessoreinheit zum Auswerten der Umgebungsbilddaten zwecks Identifizierens der Gesten aufweist, wobei die Prozessoreinheit eingerichtet ist, eine in den Umgebungsbilddaten identifizierte Geste des Operator einem vorbestimmten Befehl zuzuordnen, und dass der Leitstand eingerichtet ist, diesen Befehl zwecks Setzens der Maschineneinstellungen auszuführen.

In einer Weiterbildung ist diese Prozessoreinheit eingerichtet, mindestens folgende Arten von Gesten zu identifizieren und jeder dieser identifizierten Gesten den zugehörigen Befehl zuzuordnen:
i) Gesten betreffend eine vorbestimmte Maschineneinstellung;
ii) Gesten betreffend das gesamte Druckexemplar;
iii) Gesten betreffend die gesamte aufgeschlagene Seite;
iv) Gesten betreffend mindestens eine einzelne Zone einer oder mehrere Farbseparationen der aufgeschlagenen Seite; und
v) Gesten betreffend mindestens eine gemeinsame Zone einer oder mehrerer Farbseparationen mehrerer oder aller Seiten des Druckexemplars.

In einer Weiterbildung umfasst die Bilderfassungseinheit mindestens eine, vorzugsweise zwei, drei oder mehr Kameras, wobei die Bilderfassungseinheit derart im Raum angeordnet ist, dass in der Umgebung des Druckexemplars vom gestikulierenden Operator ausgeführte Gesten im dreidimensionalen Raum erfassbar sind.

Es wird eine Prozessoreinheit bevorzugt, welche eingerichtet ist, die dreidimensional erfassten Gesten dreidimensional auszuwerten, womit dem Operator über Gesten eine Vielzahl von Befehlen zu Setzung der Maschineneinstellungen zur Verfügung steht.

Zudem betrifft die vorliegende Erfindung die Verwendung einer Druckmaschine mit einem Leitstand eingangs genannter Art, wobei die Druckmaschine insbesondere eine Rotations-Zeitungsdruckmaschine, eine Offsetdruckmaschine oder eine Tiefdruckmaschine ist.

Die vorliegende Erfindung ist kostengünstig und auch zur Nachrüstung von bestehenden Anlagen geeignet.

Zusammenfassend kann also über dem Leitstand eine (oder mehrere) Kameras platziert sein. Diese Kameras filmen den Pult-Tisch, das darauf liegende Druckexemplar und die Gesten, die der Drucker oder Operator macht. Über die Kamera-Aufnahme des aufgeschlagenen Druckexemplars weiss das System, welche Seite der Drucker soeben begutachtet. Die entsprechenden Softproof-Bilder können über eine Darstellungseinheit angezeigt werden.

Mit verschiedenen Handgesten, die von der Kamera aufgenommen und interpretiert werden, kann der Drucker Befehle auslösen, um Farbdichte, Schnittlage und Passer zu korrigieren.

### Beispielhaft:

- über die Anzahl der gestreckten Finger wird die gewünschte Separation gewählt (Cyan = 1 Finger, Magenta = 2 Finger, Yellow = 3 Finger, Black = 4 Finger)
- Die Hand an einer bestimmten Stelle nach oben bewegen, bedeutet in dieser Farbzone die Farbdichte zu erhöhen. Die Hand nach unten bewegen analog, die Farbdichte zu verringern.
- Die Hand mit gestreckten Fingern diagonal zu bewegen bedeutet eine Passerveränderung in der entsprechenden Richtung
- Die Hand an der Oberkante nach oben bzw. unten zu bewegen bedeutet, die Schnittlage entsprechend zu verändern.

Gesten können auch benützt werden, um Maschinenelemente zu verändern. Hierzu wird auf das Pult ein Abbild der Druckmaschine aufgebracht. Wenn mit einer Hand auf ein Druckmaschinenelement gezeigt wird, kann mit der anderen Hand mit Gesten analog den obigen Gesten angedeutet werden, was mit diesem Element passieren soll.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine schematische Darstellung der erfindungsgemässen Druckmaschine mit Leitstand, in welchem ein Operator die Maschine gestikulierend bedient; und
- Fig. 2: eine schematische Darstellung eines auf einer Ablage des Leitstandes gemäss Fig. 1 liegenden Druckexemplars, in oder auf welchem der Operator mit einer Hand gestikuliert.

### BESCHREIBUNG BEVORZUGTER AUSFÜHRUNGSFORMEN

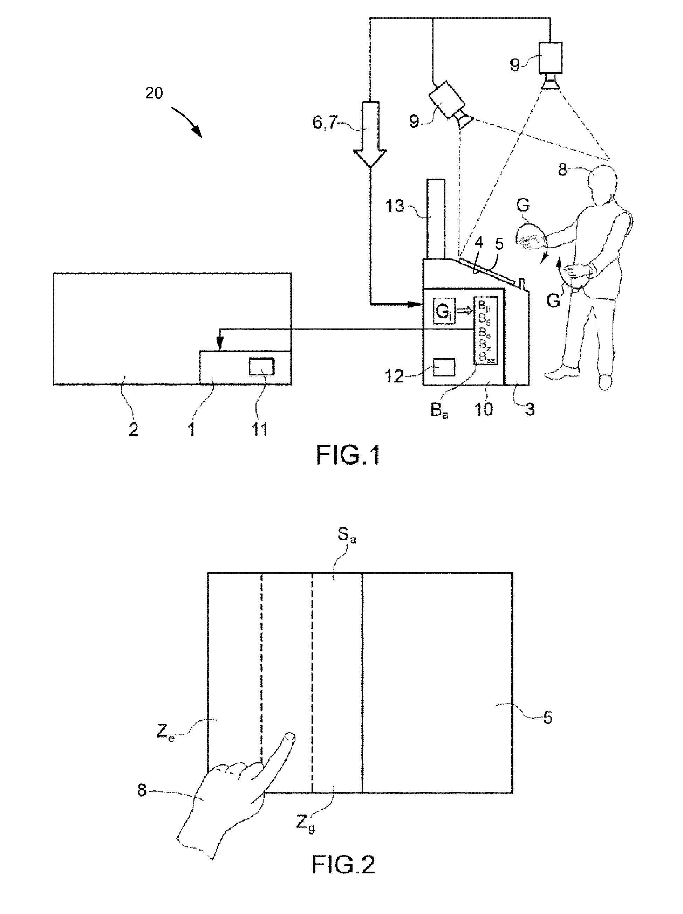

**Figur 1** zeigt in schematischer Weise eine Druckeinrichtung 20 umfassend eine Druckmaschine 2 und einen Leitstand 3. Im Leitstand 3 befindet sich ein menschlicher Operator 8. Dieser Operator 8 ist gestikulierend dargestellt und führt mit seinen Händen Gesten G aus. Im oberen Bereich des Leitstandes 3, im Wesentlichen oberhalb der Operators 8, befinden sich die als Bilderfassungseinheit 9 wirkenden Kameras. Diese Kameras 9 sind räumlich derart angeordnet, dass deren durch gestrichelte Linien in Fig. 1 dargestellten Beobachtungsbereiche aus verschiedenen Winkeln auf den Operator 8 gerichtet sind. Vorzugsweise sind die Kameras 9 oberhalb des Operators 8 und/oder einer Auflagefläche 4 des Leitstandes 3 angeordnet. Besonders bevorzugt ist die Anordnung von zwei Kameras 9, welche seitlich, d.h. links und rechts oberhalb des Operators 8 bzw. der Auflagefläche 4 befestigt sind.

Die Kameras 9 erfassen damit Umgebungsbilddaten 6, welche Bilddaten des gestikulierenden Operators 8 beinhalten. Weiter erfassen die Kameras 9 auch Druckexemplar-Bilddaten 7 eines sich im Leitstand 3 befindlichen Druckexamplars 5. Diese Daten 6, 7 werden, wie in Figur 1 dargestellt, in herkömmlicher Weise über eine Datenverbindung an eine Prozessoreinheit 10 des Leitstandes 3 weitergeleitet.

Der Leitstand 3 weist eine Auflagefläche 4 auf, auf welcher das Druckexemplar 5 liegt. Wie in **Figur 2** dargestellt, kann der Operator 8 nun bspw. mittels Handgesten, welche spezifisch auf bestimmte Bereiche des Druckexemplars 5 gerichtet sind, die Druckmaschine 2 bedienen. Wie in Fig. 2 schematisch gezeigt, können diese Handgesten *G* des Operators 8 bspw. eine aufgeschlagene Seite *Sₐ* oder aber eine einzelne Zone *Z*ₑ (insbesondere ein "Streifen" einer Seite) der aufgeschlagenen Seite *S*ₐ betreffen. Auch ist es dem Operator 8 möglich, Gesten *G* mit Wirkung für gemeinsame Zonen *Z*_{g} in den Leitstand 3 einzuspielen, wobei diese gemeinsamen Zonen *Z*_{g} die entsprechende Zone auf allen Seiten und nicht nur auf der aufgeschlagenen Seite *S*ₐ betreffen.

Es soll nun ein Beispiel einer Bedienung beschrieben werden. Der Operator 8 kann mit der rechten Hand (nicht dargestellt) Gesten ausführen, bspw. nur einen Finger ausstrecken, um anzuzeigen, dass eine Geste *G* mit seiner linken Hand die aufgeschlagene Seite *S*ₐ betrifft. Die Gesten *G* führt der Operator 8 unmittelbar über dem Druckexemplar 5 aus. Falls gewünscht, kann der Operator 8 auch mit der linken Hand bzw. einzelner deren Finger direkt auf einen Teil des Druckexemplars 5 zeigen und dieses berühren. Mit genau zwei ausgestreckten Fingern der rechten Hand kann der Operator 8 anzeigen, dass die Geste *G* seiner linken Hand eine einzelne Zone *Z*ₑ betrifft, mit genau drei ausgestreckten Fingern der rechten Hand zeigt der Operator 8 an, dass die Geste *G* der linken Hand eine gemeinsame Zone *Z*_{g} betrifft. In dieser Weise sind ein Vielzahl von für die Prozessoreinheit 10 unterscheidbaren Gesten G bereitgestellt, abhängig davon, welche Parameter der Operator 8 setzen bzw. überprüfen möchte, was entsprechend vom Einzelfall abhängt. Zudem kann die Art und Weise der Gesten *G* auf eine Vorliebe des Operators 8 abgestimmt sein. Je nach Vorliebe des Operators 8 und Ausgestaltung der Druckeinheit 20 können diese Gesten für die Bedienung individualisiert werden.

Im Leitstand 3 ist zudem ein Abbild der Druckmaschine 2 angebracht, derart, dass die Kameras 9 dieses Abbild aufnehmen. Der Operator 8 kann nun mit einer Hand auf einen Bereich dieses Abbildes der Druckmaschine 2 zeigen und eine Handgeste G ausführen, um Maschineneinstellungen 11, welche die Druckmaschine 2 im Allgemeinen betreffen, bspw. die Bahnspannung, anzupassen. Damit kann der Operator 8 intuitiv die Druckmaschine 2 bedienen. Zeigt der Operator 8 auf einen anderen Bereich des Abbildes, so kann er weitere allgemeine bzw. vorbestimmte Maschinenparameter 11 anpassen.

Wie in Figur 1 weiter erkennbar ist, weist der Leitstand 3 eine Darstellungseinheit 13 auf, mittels welcher der Leitstand 3 und insbesondere die Prozessoreinheit 10 visuelle Rückmeldungen an den Operator 8 liefert. Die Darstellungseinheit 13 ist vorzugsweise farbkalibriert. Die Interaktion zwischen Operator 8 und Leitstand 3 findet somit im Wesentlichen auf optischem Wege über die Kameras 9 und die Darstellungseinheit 13 sowie das Druckexemplar 5 statt.

Führt der Operator 8 nun eine bewusst gewählte Handgeste G aus, so wird diese von den Kameras 9 in vorgeschriebener Weise in den Umgebungsbilddaten 6 an die Prozessoreinheit 10 geliefert. Sodann identifiziert die Prozessoreinheit 10 auf konventionelle Weise aus den Umgebungsbilddaten 6 die entsprechende Geste *G* und ordnet diese einem vorbestimmten Befehl zu, worauf der zugeordnete Befehl zu einem ausgewählten Befehl *B*ₐ wird. Dabei berücksichtig die Prozessoreinheit 10 auch, ob Druckexemplar-Bilddaten 7 miteinbezogen werden müssen. Dies kann bspw. der Fall sein, wenn der Operator 8 über eine weitere Geste *G* angibt, wie oben erwähnt, dass die vorliegende Geste *G* nur die aufgeschlagene Seite *S*ₐ betrifft. Die Prozessoreinheit 10 ermittelt dann aus den Druckexemplar-Bilddaten 7, um welche Seite *S*ₐ es sich handelt. Die so ausgewählten Befehle *B*ₐ umfassen hierbei also einen Vielzahl von Befehlen, also allgemeine Befehle *B*₁₁, welche die Maschine 2 und deren allgemeine Maschineneinstellungen 11 betreffen, Druckexemplar-spezifische Befehle *B*₅, wie etwa Schnittlage, Seitenspezifische Befehle *B*ₛ, wie Passer, Zonen-spezifische Befehle *B*_{z}, wie etwa Anordnung der Seitenzahlen, und Zonen- und Seitenspezifische Befehle *B*_{zs}, wie etwa ausgewählt Bilder.

Wird dieser ausgewählte Befehl *B*ₐ aufgrund der Geste *G* des Operators 8 vom Leitstand 3 durch dessen Prozessoreinheit 10 nicht aufgrund vorbestimmter Einstellungen oder benutzerspezifisch eingegebener Einstellungen verweigert, so wird der ausgewählte Befehl *B*ₐ ausgeführt und der Leitstand 3 kommuniziert über eine Kommunikationsverbindung mit der Druckmaschine 2 der Druckeinrichtung 20 und setzt die Maschineneinstellungen 1 entsprechend der Weisung des Operators 8. Handelt es sich beim ausgewählten Befehl *B*ₐ gemäss in der Prozessoreinheit 10 gespeicherter Extremwerte um eine unerlaubte oder möglicherweise mit Gefährdung der Maschine oder der Umgebung einhergehende Manipulation der Maschineneinstellungen 1, 11, so verweigert die Prozessoreinheit 10 den Befehl und gibt dem Operator 8 eine entsprechende Rückmeldung über die Darstellungseinheit 13 oder andere Mittel.

Es ist hiermit erkennbar, dass der Operator 8 in einer sehr freien Weise auf bzw. über dem Druckexemplar 5 mittels seiner Hände gestikulierend die Druckmaschine 2 steuern kann, ohne eine Abstraktion des Druckexemplars 5 zu benötigen. Dies ist insbesondere insofern vorteilhaft, als der Operator 8 damit die Hände frei von konventionellen Bedienelementen im bzw. über dem Druckexemplar 5 führen kann. Dies steigert seine Effizienz insofern, als er seine Hände nicht ständig zu randseitig am Druckexemplar 5 in konventioneller Weise angeordneten Bedienelementen führen muss. Des Weiteren ist es dem Operator 8 damit möglich, die Befehle zur Erstellung der Maschineneinstellungen 1, 11 direkt auf bzw. im Druckexemplar 5 anzubringen. Dies ist damit eine sehr intuitive Art die Druckmaschine 2 zu steuern. Auch fällt es dem Operator 8 damit leichter, durch das Druckexemplar 5 hindurch zu blättern, da er sich nur auf seine Hände zu konzentrieren braucht, ohne konventionelle Bedienungselemente in Betracht ziehen zu müssen.

Das Zusammenwirken der Bilderfassungseinheit 9 und der Prozessoreinheit 10 mit der Druckmaschine 2 kann hierbei durch konventionelle Mittel ermöglicht werden.

Der Leitstand 3 ist also mit einer Bilderfassungseinheit 9 auszustatten und mit einer Prozessoreinheit 10, welche eingerichtet aus den Umgebungsbilddaten 6, respektive dem Druckexemplar-Bilddaten 7 die Gesten *G* des Operators 8 zu identifizieren und einen vorbestimmten Befehl zuzuordnen.

Der Leitstand 3 kann damit in effizienter einfacher und intuitiver Weise von einem Operator 8 zur Bedienung einer Druckmaschine 2, insbesondere einer Rotations-Zeitungsdruckmaschine, einer Offset Druckmaschine oder einer Tiefdruckmaschine verwendet werden.

### BEZUGSZEICHENLISTE

- 1: allg. Maschineneinstellungen
- 2: Druckmaschine
- 3: Leitstand
- 4: Auflagefläche
- 5: Druckexemplar
- 6: Umgebungsbilddaten
- 7: Druckexemplar-Bilddaten
- 8: Operator
- 9: Bilderfassungseinheit
- 10: Prozessoreinheit
- 11: Vorbestimmte Maschineneinstellungen
- 12: Druckexemplar-Solldaten
- 13: Darstellungseinheit
- 20: Druckeinrichtung
- *B*ₐ: Ausgewählter Befehl
- *B*₁₁: Allgemeiner Befehl
- *B*₅: Druckexemplar-spezifischer Befehl
- *B*ₛ: seitenspezifischer Befehl
- *B*_{z}: Zonenspezifischer Befehl
- *B*_{zs}: Zonen- und seitenspezifischer Befehl
- *G*: Geste des Operators 8
- *Gᵢ*: Identifizierbare Geste
- *S*ₐ: Aufgeschlagene Seite
- *Z*ₑ: Einzelne Zone
- *Z*_{g}: Gemeinsame Zone

## Patentansprüche

1. Verfahren zur Setzung von Maschineneinstellungen (1) einer Druckmaschine (2) mittels eines Leitstandes (3), wobei der Leitstand (3) eine Auflagefläche (4) zur Auflage eines Druckexemplars (5) aufweist, und wobei der Leitstand (3) wenigstens folgende Verfahrensschritte ausführt:
(a) Erfassen mittels einer Bilderfassungseinheit (9) von Umgebungsbilddaten (6) von mindestens einer Geste (*G*) eines in einer Umgebung der Auflagefläche (4) des Druckexemplars (5) gestikulierenden menschlichen Operators (8); und
(b) Auswerten der Umgebungsbilddaten (6) mittels einer Prozessoreinheit (10) des Leitstandes (3), wobei die Prozessoreinheit (10) die mindestens eine Geste (G) des Operators (8) in den Umgebungsbilddaten (6) identifiziert; und
(c) Zuordnen der mindestens einen identifizierten Geste (*G*ᵢ) des Operators (8) einem vorbestimmten Befehl durch die Prozessoreinheit (10), wobei der zugeordnete Befehl zu einem ausgewählten Befehl (*B*ₐ) wird, welcher bei Ausführung durch den Leitstand (3) zur Setzung von Maschineneinstellungen (1) dient.

2. Verfahren nach Anspruch 1, **dadurch gekennzeichnet, dass** der ausgewählte Befehl (*B*ₐ) von der Prozessoreinheit (10) bearbeitet wird, indem die Prozessoreinheit (10) den ausgewählten Befehl (*B*ₐ) wahlweise zwecks Setzens der Maschineneinstellungen (1) ausführt oder aufgrund von Maschineneinstellungen (1) oder benutzer- oder werkseitigen Voreinstellungen verweigert.

3. Verfahren nach Anspruch 1 oder 2, **dadurch gekennzeichnet, dass** die Prozessoreinheit (10) mindestens folgende Arten von Gesten (G) identifizieren und jeder dieser identifizierten Gesten (*G*ᵢ) den zugehörigen Befehl zuordnen kann:
i) Gesten (*G*₁₁) betreffend eine vorbestimmte Maschineneinstellung (11);
ii) Gesten (*G*₅) betreffend das gesamte Druckexemplar (5);
iii) Gesten (*G*ₐ) betreffend die gesamte aufgeschlagene Seite (*S*ₐ);
iv) Gesten (*G*ₑ) betreffend mindestens eine einzelne Zone (*Z*ₑ) einer oder mehrerer Farbseparationen der aufgeschlagenen Seite (*S*ₐ); und
v) Gesten (*G*_{g}) betreffend mindestens eine gemeinsame Zone (*Z*_{g}) einer oder mehrerer Farbseparationen mehrerer oder aller Seiten des Druckexemplars (5).

4. Verfahren nach einem der Ansprüche 1 bis 3, **dadurch gekennzeichnet, dass** die Umgebungsbilddaten (6) durch die Bilderfassungseinheit (9) optisch im dreidimensionalen Raum erfasst werden, wobei die Bilderfassungseinheit (9) vorzugsweise aus mindestens einer Kamera besteht.

5. Verfahren nach einem der Ansprüche 1 bis 4, **dadurch gekennzeichnet, dass** die Gesten (G) des Operators (8) Handgesten sind, wobei die Gesten (*G*) vorzugsweise berührungsfrei in einem Luftvolumen der besagten Umgebung ausgeführt werden.

6. Verfahren nach einem der Ansprüche 1 bis 5, **dadurch gekennzeichnet, dass** dem gestikulierenden Operator (8) aufgrund mindestens einer von der Prozessoreinheit (10) identifizierten Geste (*G*ᵢ):
i) Information über die Druckmaschine (2) mittels einer Darstellungseinheit (13) im Leitstand (3) angezeigt wird; und/oder
ii) Zugang zu weiteren durch die Prozessoreinheit (10) einer identifizierten Geste (*G*ᵢ) zuordenbare Befehle von der Prozessoreinheit (10) ermöglicht wird; und/oder
iii) mindestens ein zusätzliches durch den Operator (8) aktivierbares Manipulationselement zum Setzen von Maschineneinstellungen (1) von der Prozessoreinheit (10) bereitgestellt wird.

7. Verfahren nach einem der Ansprüche 2 bis 6, **dadurch gekennzeichnet, dass** die Prozessoreinheit (10) dem Operator (8) beim Ausführen eines ausgewählten Befehls (*B*ₐ) eine erste Rückmeldung und/oder beim Verweigern eines ausgewählten Befehls (*B*ₐ) eine zweite Rückmeldung präsentiert.

8. Verfahren nach Anspruch 1 oder 2, **dadurch gekennzeichnet, dass** vom Leitstand (3) mittels der Bilderfassungseinheit (9) Druckexemplar-Bilddaten (7) eines auf der Ablage abgelegten Druckexemplars (5) erfasst und mittels der Prozessoreinheit (10) ausgewertet werden, wobei die Druckexemplar-Bilddaten (7) vorzugsweise wenigstens Information über die aufgeschlagene Seite (*S*ₐ) des auf der Auflagefläche (4) des Leitstandes (3) aufliegenden Druckexemplars (5) umfassen.

9. Verfahren nach Anspruch 3, **dadurch gekennzeichnet, dass** die Prozessoreinheit (10) die Druckexemplar-Bilddaten (7) mit Druckexemplar-Solldaten (12) vergleicht und bei vordefinierter Abweichung der Druckexemplar-Bilddaten (7) von den Druckexemplar-Solldaten (12) automatisch eine vordefinierte Korrektur an den Maschineneinstellungen (1) der Druckmaschine (2) vornimmt.

10. Verfahren nach einem der Ansprüche 1 bis 10 zur Steuerung einer Druckmaschine (2), insbesondere einer Rotations-Zeitungsdruckmaschine, einer Offsetdruck-Druckmaschine oder einer Tiefdruck-Druckmaschine.

11. Leitstand (3) für die Steuerung von Maschineneinstellungen (1) einer Druckmaschine (2), wobei der Leitstand (3) eine Auflagefläche (4) zur Auflage eines Druckexemplars (5) aufweist, **dadurch gekennzeichnet,**
**dass** der Leitstand (3) ferner eine Bilderfassungseinheit (9) zum Erfassen von Umgebungsbilddaten (6) von Gesten (G) eines in einer Umgebung des Druckexemplars (5) gestikulierenden menschlichen Operators (8) aufweist,
**dass** der Leitstand (3) eine Prozessoreinheit (10) zum Auswerten der Umgebungsbilddaten (6) zwecks Identifizierens der Gesten (G) aufweist, wobei die Prozessoreinheit (10) eingerichtet ist, eine in den Umgebungsbilddaten (6) identifizierte Geste des Operator einem vorbestimmten Befehl zuzuordnen,
und **dass** der Leitstand (3) eingerichtet ist, diesen Befehl zwecks Setzens der Maschineneinstellungen (1) auszuführen.

12. Leitstand (3) nach Anspruch 9, **dadurch gekennzeichnet, dass** die Prozessoreinheit (10) eingerichtet ist, mindestens folgende Arten von Gesten (*G*) zu identifizieren und jeder dieser identifizierten Gesten (*G*ᵢ) den zugehörigen Befehl zuzuordnen:
vi) Gesten (*G*₁₁) betreffend eine vorbestimmte Maschineneinstellung (11);
vii) Gesten (*G*₅) betreffend das gesamte Druckexemplar (5);
viii) Gesten (*G*ₐ) betreffend die gesamte aufgeschlagene Seite (*S*ₐ);
ix) Gesten (*G*ₑ) betreffend mindestens eine einzelne Zone (*Z*ₑ) einer oder mehrerer Farbseparationen der aufgeschlagenen Seite (*S*ₐ); und
x) Gesten (*G*g) betreffend mindestens eine gemeinsame Zone (*Z*_{g}) einer oder mehrerer Farbseparationen mehrerer oder aller Seiten des Druckexemplars (5).

13. Leitstand (3) nach dem Anspruch 12, **dadurch gekennzeichnet, dass** die Bilderfassungseinheit (9) mindestens eine, vorzugsweise zwei, drei oder mehr Kameras umfasst, wobei die Bilderfassungseinheit (9) derart im Raum angeordnet ist, dass in der Umgebung des Druckexemplars (5) vom gestikulierenden Operator (8) ausgeführte Gesten (*G*) im dreidimensionalen Raum erfassbar sind, und dass die Prozessoreinheit (10) die dreidimensional erfassten Gesten vorzugsweise dreidimensional auswertet.

14. Leitstand (3) nach einem der Ansprüche 11 bis 13, **dadurch gekennzeichnet, dass** die Prozessoreinheit (10) eingerichtet ist, Druckexemplar-Bilddaten (7) des Druckexemplars (5) zu erfassen und diese vorzugsweise mit Druckexemplar-Solldaten (12) zu vergleichen und bei vordefinierter Abweichung der Druckexemplar-Bilddaten (7) von den Druckexemplar-Solldaten (12) automatisch eine vordefinierte Korrektur an den Maschineneinstellungen (1) der Druckmaschine vorzunehmen.

15. Verwendung einer Druckmaschine (2) mit einem Leitstand (3) nach einem der Ansprüche 11 bis 14, wobei die Druckmaschine (2) insbesondere eine Rotations-Zeitungsdruckmaschine, eine Offsetdruckmaschine oder eine Tiefdruckmaschine ist.
